# EUROPÄISCHE PATENTSCHRIFT

(11) **EP 3 394 461 B1**
(45) Veröffentlichungstag und Bekanntmachung des Hinweises auf die Patenterteilung: **02.06.2021**
(21) Anmeldenummer: 16819430.6
(22) Anmeldetag: 28.11.2016
(51) Int. Cl.: F16D 13/75, F16D 21/06

(54) **DOPPELKUPPLUNG FÜR EIN KRAFTFAHRZEUG**
DUAL CLUTCH FOR A MOTOR VEHICLE
EMBRAYAGE DOUBLE POUR UN VÉHICULE AUTOMOBILE

(30) Priorität: 22.12.2015 DE 102015226494
(43) Veröffentlichungstag der Anmeldung: 31.10.2018
(73) Patentinhaber: Schaeffler Technologies AG & Co. KG, 91074 Herzogenaurach (DE)
(72) Erfinder: NEUTARD, Georg, 76139 Karlsruhe (DE); WEIS, Dominik, 77815 Bühl (DE); HOPPE, Marcus, 77855 Achern (DE)
(86) Internationale Anmeldenummer: PCT/DE2016/200555
(87) Internationale Veröffentlichungsnummer: WO 2017/108037

(56) Entgegenhaltungen:
- WO-A1-2008/025323
- WO-A1-2008/058508
- DE-A1- 10 238 403
- DE-A1-102011 085 866
- DE-A1-102013 226 470

## Beschreibung

Die Erfindung betrifft eine Doppelkupplung zum Kuppeln einer Antriebswelle eines Kraftfahrzeuges mit einer von zwei Getriebeeingangswellen eines Getriebes, mit mindestens einer Gegenplatte und zwei Anpressplatten zum reibschlüssigen Verpressen jeweils einer Kupplungsscheibe zwischen der mindestens einen Gegenplatte und jeder Anpressplatte. Die Doppelkupplung weist zumindest eine Nachstelleinrichtung zum Nachstellen eines verschleißbedingten Fehlabstands der ersten Anpressplatte zu der Gegenplatte auf,

Aus der DE 10 2013 207 694 A1 ist eine Doppelkupplung, die auf den Oberbegriff des Patentanspruchs 1 lesbar ist, mit einer Nachstelleinrichtung zum Nachstellen eines verschleißbedingten Fehlabstands der ersten Anpressplatte zu der Gegenplatte bekannt. Die weggesteuerte Nachstelleinrichtung umfasst einen Sensierring mit einem sich in Umfangsrichtung erstreckenden Ringkörper und mit mindestens einer mit dem Ringkörper verbundenen Rampe zum Abgleiten auf einer Gegenrampe eines Kupplungsdeckels. Weiter weist der Sensierring einen Anlagebereich zum klemmenden Anliegen einer Klemmfeder auf, wobei der Anlagebereich zumindest in einem Teilabschnitt unter einem Winkel geneigt zu einer in der radialen Richtung angeordneten Ebene verläuft.

Die Klemmfeder gemäß DE 10 2013 207 694 A1 wirkt mit einer Gegenanschlagsfläche eines Zugmittels für die eine Anpressplatte zusammen. Bei zunehmendem Verschleiß der Reibbeläge wird die Gegenanschlagsfläche bei Betätigung der Anpressplatte soweit entlang der axialen Richtung bewegt, dass sie mit einer Anschlagfläche der Klemmfeder (zweiter Anschlag) zusammenwirkt und die Klemmung der Klemmfeder an dem Anlagebereich zumindest reduziert wird. Die Entlastung des Sensierrings führt dazu, dass der Sensierring über einen Federmechanismus in Umfangsrichtung verdreht wird, so dass infolge der Rampenanordnung mit dem Kupplungsdeckel auch eine Anlagefläche für eine Hebelfeder verschleißabhängig entlang der axialen Richtung verlagert wird. Die Verdrehung des Sensierringes erfolgt solange, bis die Klemmung zwischen Klemmfeder und Anlagebereich, aufgrund der Neigung des Anlagebereichs, wieder eine bestimmte Stärke erreicht hat.

Eine Einstellung dieses Auslösepunkts, also der Position entlang der axialen Richtung, bei dem die Klemmfeder durch den Gegenanschlag des Zugmittels betätigt und die Klemmung im Anlagebereich zumindest reduziert wird, ist hier nicht möglich. Dieser Auslösepunkt ist durch die Form der bereitgestellten Klemmfeder und durch die Ausgestaltung des Zugmittels vorgegeben. Insbesondere wird in DE 10 2013 207 694 A1 der Bereich des Zugmittels, der den Gegenanschlag aufweist, auch dafür genutzt, einen Anschlag mit dem Kupplungsdeckel auszubilden, so dass ein Abstand der Anpressplatte von der Gegenplatte bei ausgerückter Kupplung ebenfalls vorgegeben ist.

Aufgabe der Erfindung ist es, die aus der DE 10 2013 207 694 A1 bekannte Doppelkupplung baulich und/ oder funktional zu verbessern. Insbesondere soll eine Einstellbarkeit des Auslösepunkts ermöglicht werden, so dass die Funktion einer Doppelkupplung in zusammengebautem Zustand genau justierbar ist.

Diese Aufgabe wird gelöst mit einer Doppelkupplung gemäß den Merkmalen des unabhängigen Anspruchs. Weitere vorteilhafte Ausgestaltungen der Erfindung sind in den abhängig formulierten Ansprüchen angegeben. Es ist darauf hinzuweisen, dass die in den abhängig formulierten Ansprüchen einzeln aufgeführten Merkmale in technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Doppelkupplung zum Kuppeln einer Antriebswelle eines Kraftfahrzeuges mit einer von zwei Getriebeeingangswellen eines Getriebes vorgeschlagen. Die Doppelkupplung umfasst mindestens eine Gegenplatte (ggf. auch zwei) und zwei Anpressplatten zum reibschlüssigen Verpressen jeweils einer Kupplungsscheibe zwischen der mindestens einen Gegenplatte und jeder Anpressplatte. Die erste Anpressplatte ist auf einer ersten Seite der Gegenplatte angeordnet und ein Kupplungsdeckel sowie eine erste Hebelfeder auf einer gegenüberliegenden zweiten Seite der Gegenplatte, wobei die erste Anpressplatte über einen Zuganker durch die erste Hebelfeder gegenüber dem Kupplungsdeckel entlang einer axialen Richtung verlagerbar ist. Die Doppelkupplung weist weiter zumindest eine Nachstelleinrichtung zum Nachstellen eines verschleißbedingten Fehlabstands der ersten Anpressplatte zu der Gegenplatte auf, die einen in einer Umfangsrichtung federbelasteten Sensierring und eine Klemmfeder umfasst. Der Sensierring weist einen sich in der Umfangsrichtung erstreckenden Ringkörper und mindestens eine mit dem Ringkörper verbundene Rampe zum Abgleiten auf einer Gegenrampe des Kupplungsdeckels sowie einen Anlagebereich zum klemmenden Anliegen der Klemmfeder auf, wobei der Anlagebereich zumindest in einem Teilabschnitt unter einem Winkel schräg zu einer in einer radialen Richtung sich erstreckenden Ebene verläuft. Die Klemmfeder erstreckt sich, ausgehend von einer Befestigung an dem Kupplungsdeckel an einem ersten Ende, in einem ersten Abschnitt im Wesentlichen entlang der Umfangsrichtung entlang des Anlagebereichs. Die Klemmfeder erstreckt sich in einem, an den ersten Abschnitt anschließenden zweiten Abschnitt in der axialen Richtung durch eine Öffnung in dem Zuganker hindurch. Die Klemmfeder weist in einem, sich an den zweiten Abschnitt anschließenden und hin zu einem zweiten Ende (insbesondere entlang der Umfangsrichtung) erstreckenden dritten Abschnitt einen, in der axialen Richtung mit dem Zuganker zusammenwirkenden ersten Anschlag auf, so dass durch eine Einstellung der Distanz zwischen erstem Anschlag und einem damit zusammenwirkenden Kontaktpunkt des Zugankers ein Auslösepunkt der Klemmfeder einstellbar ist, bei dem bei Betätigung der ersten Hebelfeder die Klemmung des Sensierrings durch die Klemmfeder in dem Anlagebereich durch den Zuganker zumindest reduzierbar ist.

Die eingangs angeführte DE 10 2013 207 694 A1 wird hiermit vollumfänglich in Bezug genommen. Insbesondere entspricht die Doppelkupplung gemäß der vorliegenden Erfindung im Wesentlichen der Doppelkupplung der DE 10 2013 207 694 A1. Dies gilt insbesondere für die Ausgestaltung der Nachstelleinrichtung. Gemäß der vorliegenden Erfindung wird insbesondere eine andere Klemmfeder vorgeschlagen. Die nun vorgeschlagene Klemmfeder weist einen ersten Anschlag auf, der mit einem Kontaktpunkt (oder einer Kontaktfläche) des Zugankers zusammenwirkt. Dazu weist die Klemmfeder eine Art Fortsatz auf, der sich durch eine Öffnung in dem Zuganker erstreckt. Dieser Fortsatz ist im (insbesondere zumindest teilweise) zusammengebauten Zustand der Doppelkupplung einstellbar ausgeführt. Alternativ oder zusätzlich ist an dem Zuganker ein Teilbereich mit dem Kontaktpunkt angeordnet, der sich in seiner Lage entlang der axialen Richtung einstellen lässt.

Bei einem von dem Sensierring sensierten Verschleiß der Reibbeläge kann sich der federbelastete Sensierring relativ zu dem Kupplungsdeckel verdrehen, wobei die Rampe des Sensierrings an einer insbesondere an dem Kupplungsdeckel vorgesehenen Gegenrampe abgleiten kann. Durch die an der Gegenrampe abgleitende Rampe des Sensierrings entfernt sich die von der Gegenrampe wegweisende Seite des Sensierrings bei einem sensierten Verschleiß immer weiter weg von der Gegenrampe bzw. von dem Kupplungsdeckel. Durch den angeschrägten Anlagebereich kann erreicht werden, dass die Lage der Klemmfeder zu dem Anlagebereich trotz der Verschiebung des Sensierrings entlang der axialen Richtung weitgehend konstant bleibt.

Weiter weist die Nachstelleinrichtung einen in Umfangsrichtung federbelasteten Abstützring (in DE 10 2013 207 694 A1 als Nachstellring bezeichnet) auf, der eine Abstützung für die erste Hebelfeder beim Einrücken der Kupplung bildet. Der Abstützring kann insbesondere einen ringförmigen Schwenkpunkt für die erste Hebelfeder ausbilden, wobei dieser Schwenkpunkt bei einem Nachstellen durch die Nachstelleinrichtung ebenfalls entlang der axialen Richtung verlagert werden kann, um den ursprünglichen Betätigungsweg zum Einrücken der Kupplung wiederherzustellen und den verschleißbedingten Fehlabstand zwischen der Anpressplatte und der Gegenplatte zumindest teilweise zu kompensieren. Hierzu kann der Abstützring insbesondere über ein Rampensystem verdreht werden. Hinsichtlich der Anordnung und Funktion des Abstützrings (der Abstützung) und des Sensierrings wird auf die DE 10 2013 207 694 A1 verwiesen.

Insbesondere erstreckt sich die Klemmfeder in dem dritten Abschnitt im Wesentlichen entlang der Umfangsrichtung.

Bevorzugt weist zumindest der dritte Abschnitt eine gegenüber dem ersten und/oder dem zweiten Abschnitt geringere Breite in der radialen Richtung und/oder eine geringere Dicke auf. Die geringere Breite bzw. Dicke erleichtert insbesondere eine Umformung/ Einstellung/ Umbiegen zumindest des dritten Abschnitts mit dem ersten Anschlag gegenüber dem ersten bzw. ggf. zusätzlich dem zweiten Abschnitt der Klemmfeder.

Insbesondere ist der Kontaktpunkt an einem Teilbereich des Zugankers angeordnet, der bei zusammengebauter Doppelkupplung gegenüber dem Zuganker zumindest in der axialen Richtung mechanisch verformbar ist, so dass durch die Verformung der Auslösepunkt der Klemmfeder einstellbar ist.

Die Umformung/ Verformung des Teilbereichs bzw. zumindest des dritten Abschnitts soll dabei so möglich sein, dass andere Bereich der Klemmfeder bzw. des Zugankers nicht verformt werden.

Insbesondere ist die Öffnung des Zugankers durch Wandbereiche des Zugankers begrenzt, wobei der Teilbereich in die Öffnung hineinragt und damit zumindest in einer radialen Richtung von den Wandbereichen beabstandet angeordnet ist. Insbesondere bildet der Teilbereich also eine Art Zunge, die ausgehend von einem Wandbereich der Öffnung in die Öffnung hineinragt. Eine Verformung des Teilbereichs erfolgt damit nur gegenüber dem einen Wandbereich, von dem aus sich der Teilbereich in die Öffnung hinein erstreckt. Eine Belastung und ggf. Umformung der seitlichen Wandbereiche kann so wirksam verhindert werden.

Insbesondere bilden der Teilbereich und der Zuganker eine Baugruppe, die aus zumindest zwei Bauteilen, nämlich zumindest Teilbereich und Zuganker, zusammengefügt ist. Zusammengefügt heißt hier, dass Teilbereich und Zuganker als Einzelteile bereitgestellt werden und im Rahmen eines Fügeprozesses (mechanisches Fügeverfahren, also Vernieten, Verschrauben, etc.; thermisches Fügeverfahren, also Schweißen, Löten, etc.) miteinander verbunden werden. So kann der Teilbereich in besonders vorteilhafter Weise einen anderen Werkstoff, eine andere Materialstärke oder ähnliches aufweisen, so dass ggf. eine Verformung/ Umformung des Teilbereichs bei der Einstellung der Doppelkupplung vereinfacht wird.

Insbesondere weist zumindest der Teilbereich eine gegenüber dem, den Teilbereich unmittelbar umgebenden Bereich des Zugankers eine reduzierte Wanddicke auf. Der Teilbereich ist von dem umgebenden Bereich insbesondere dadurch unterscheidbar, dass eine an dem Teilbereich angreifende Kraft ausschließlich eine Umformung des Teilbereichs gegenüber den unmittelbar umgebenden Bereichen bewirkt.

Insbesondere kann auch eine Prägung vorgesehen sein, die den Teilbereich von den unmittelbar umgebenden Bereichen des Zugankers abgrenzt. Eine solche Prägung, z. B. eine Prägelinie, erzeugt insbesondere eine lokale Verringerung der Wanddicke, so dass eine Umformung des Teilbereichs gegenüber dem Zuganker vereinfacht wird.

Bevorzugt ist der Kupplungsdeckel zumindest mit einem Teilbereich in der axialen Richtung zwischen der mindestens einen Gegenplatte und der ersten Hebelfeder angeordnet, wobei die Klemmfeder in diesem Teilbereich an dem Kupplungsdeckel befestigt ist.

Insbesondere ist die Klemmfeder über eine Vernietung an dem Kupplungsdeckel befestigt. Die Klemmfeder kann aber auch über eine Verschraubung, Schweißverbindung o.ä. mit dem Kupplungsdeckel verbunden sein.

Insbesondere ist der Sensierring durch die Klemmfeder in einer radialen Richtung gegenüber einer Drehachse der Doppelkupplung zentriert.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen schematisch:
- Fig. 1:: ein Kraftfahrzeug mit einer Doppelkupplung gemäß DE 10 2013 207 694 A1, wobei die Doppelkupplung in einer Seitenansicht nur teilweise und im Schnitt dargestellt ist;
- Fig. 2:: eine perspektivische Ansicht von Teilen der Doppelkupplung gemäß Fig. 1;
- Fig. 3:: eine seitliche Detailansicht eines Sensierrings;
- Fig. 4:: eine Klemmfeder in einer Draufsicht (entlang der axialen Richtung);
- Fig. 5:: die Klemmfeder in einer Seitenansicht (entlang der radialen Richtung) im eingebauten Zustand;
- Fig. 6:: die Klemmfeder in einer anderen Seitenansicht (entlang der Umfangsrichtung) im eingebauten Zustand;
- Fig. 7:: ein Detail der Klemmfeder und des Zugankers in einer Draufsicht (entlang der axialen Richtung); und
- Fig. 8:: ein weiteres Detail der Klemmfeder und des Zugankers in einer Seitenansicht (entlang der radialen Richtung).

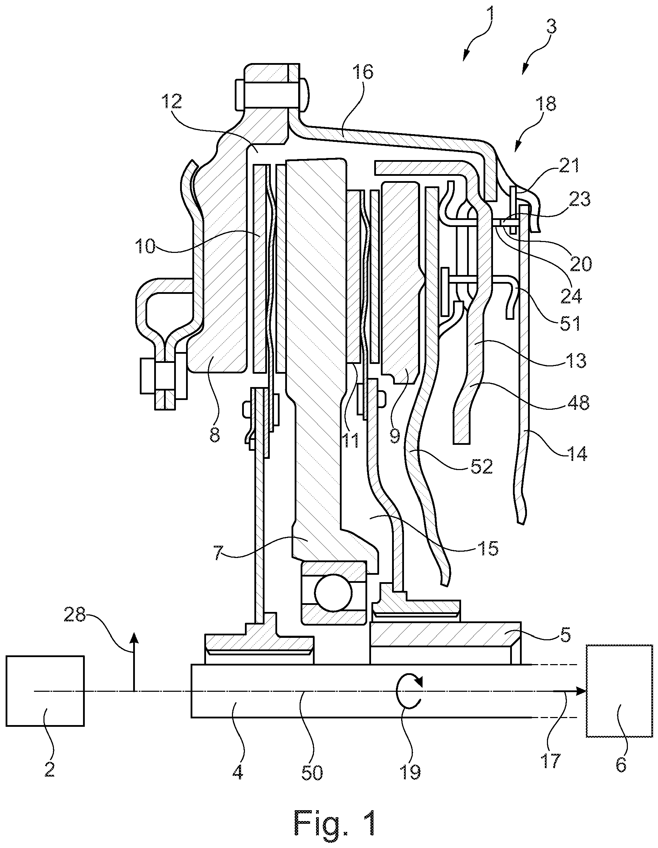

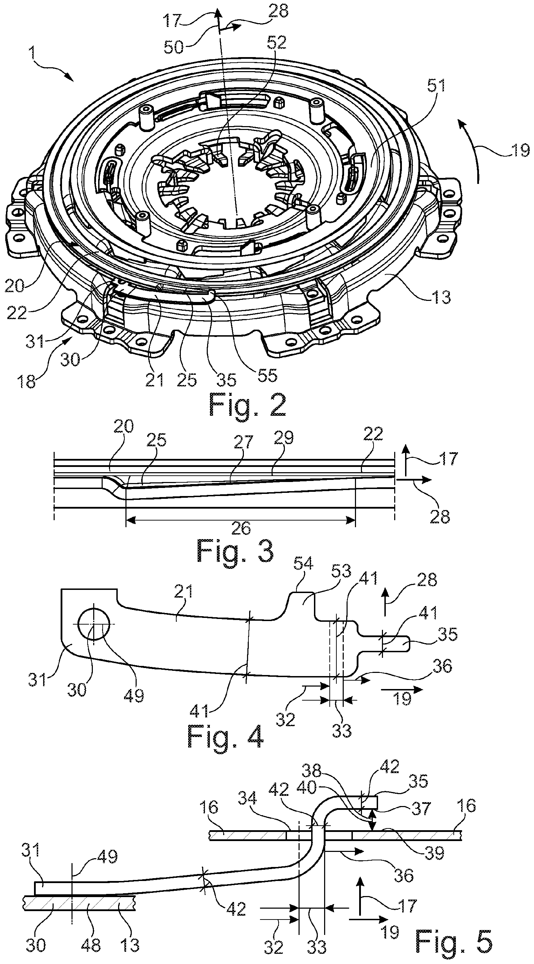

Die Fig. 1 zeigt ein Kraftfahrzeug 3 mit einer Doppelkupplung 1 gemäß DE 10 2013 207 694 A1, wobei die Doppelkupplung 1 in einer Seitenansicht nur teilweise und im Schnitt dargestellt ist. Die Doppelkupplung 1 ist zum Kuppeln einer Antriebswelle 2 eines Kraftfahrzeuges 3 mit einer von zwei Getriebeeingangswellen 4, 5 eines Getriebes 6 vorgesehen, wobei diese Bauteile eine gemeinsame Drehachse 50 aufweisen. Die Doppelkupplung 1 umfasst eine Gegenplatte 7 und zwei Anpressplatten 8, 9 zum reibschlüssigen Verpressen jeweils einer Kupplungsscheibe 10, 11 zwischen der Gegenplatte 7 und jeder Anpressplatte 8, 9. Die erste Anpressplatte 8 ist auf einer ersten Seite 12 der Gegenplatte 7 angeordnet und ein Kupplungsdeckel 13 sowie eine erste Hebelfeder 14 auf einer gegenüberliegenden zweiten Seite 15 der Gegenplatte 7, wobei die erste Anpressplatte 8 über einen Zuganker 16 durch die erste Hebelfeder 14 gegenüber dem Kupplungsdeckel 13 entlang einer axialen Richtung 17 verlagerbar ist. Die Doppelkupplung 1 weist weiter zumindest eine Nachstelleinrichtung 18 zum Nachstellen eines verschleißbedingten Fehlabstands der ersten Anpressplatte 8 zu der Gegenplatte 7 auf, die einen in einer Umfangsrichtung 19 federbelasteten Sensierring 20 und eine Klemmfeder 21 umfasst. Der Sensierring 20 weist einen sich in der Umfangsrichtung 19 erstreckenden Ringkörper 22 und mindestens eine mit dem Ringkörper 22 verbundene Rampe 23 zum Abgleiten auf einer Gegenrampe 24 des Kupplungsdeckels 13 sowie einen Anlagebereich 25 (siehe Fig. 2) zum klemmenden Anliegen der Klemmfeder 21 auf.

Die Klemmfeder 21 gemäß DE 10 2013 207 694 A1 wirkt mit einer Gegenanschlagsfläche eines Zugmittels (hier der Zuganker 16) für die erste Anpressplatte 8 zusammen. Bei zunehmendem Verschleiß der Reibbeläge der ersten Kupplungsscheibe 10 wird die Gegenanschlagsfläche bei Betätigung der Anpressplatte 8 soweit entlang der axialen Richtung 17 bewegt, dass sie mit einer Anschlagfläche (zweiter Anschlag 55) der Klemmfeder 21 zusammenwirkt und die Klemmung der Klemmfeder 21 an dem Anlagebereich 25 zumindest reduziert wird. Die Entlastung des Sensierrings 20 führt dazu, dass der Sensierring 20 über einen Federmechanismus in Umfangsrichtung 19 verdreht wird, so dass infolge der Rampenanordnung mit dem Kupplungsdeckel 13 auch eine Anlagefläche an dem Sensierring 20 für die erste Hebelfeder 14 verschleißabhängig entlang der axialen Richtung 17 verlagert wird. Die Verdrehung des Sensierringes 20 erfolgt solange, bis die Klemmung zwischen Klemmfeder 21 und Anlagebereich 25, aufgrund der Neigung des Anlagebereichs, wieder eine bestimmte Stärke erreicht hat.

Eine Einstellung dieses Auslösepunkts 40, also der Position entlang der axialen Richtung 17, bei dem die Klemmfeder 21 durch den Gegenanschlag des Zugmittels betätigt und die Klemmung im Anlagebereich 25 zumindest reduziert wird, ist hier nicht möglich. Dieser Auslösepunkt 40 ist durch die Form der bereitgestellten Klemmfeder 21 und durch die Ausgestaltung des Zugmittels vorgegeben. Insbesondere wird in DE 10 2013 207 694 A1 der Bereich des Zugmittels, der den Gegenanschlag aufweist, auch dafür genutzt, einen Anschlag mit dem Kupplungsdeckel 13 auszubilden, so dass ein Abstand der ersten Anpressplatte 8 von der Gegenplatte 7 bei ausgerückter Kupplung ebenfalls vorgegeben ist.

Fig. 2 zeigt eine perspektivische Ansicht von Teilen der Doppelkupplung 1 gemäß Fig. 1. Hier ist die Nachstelleinrichtung 18 mit einem in einer Umfangsrichtung 19 federbelasteten Sensierring 20 und einer Klemmfeder 21 dargestellt. Der Sensierring 20 weist einen sich in der Umfangsrichtung 19 erstreckenden Ringkörper 22 und mindestens eine mit dem Ringkörper 22 verbundene Rampe 23 zum Abgleiten auf einer Gegenrampe 24 des Kupplungsdeckels 13 sowie einen Anlagebereich 25 (siehe Fig. 2) zum klemmenden Anliegen der Klemmfeder 21 auf. Weiter ist hier der Abstützring 51 dargestellt, der den Schwenkpunkt für die ersten Hebelfeder 14 (hier nicht dargestellt) bildet. Weiter ist hier die zweite Hebelfeder 52 zur Betätigung der zweiten Anpressplatte 9 erkennbar.

Der Anlagebereich 25 verläuft zumindest in einem Teilabschnitt 26 unter einem Winkel schräg zu einer in einer radialen Richtung 28 sich erstreckenden Ebene 29 (siehe Fig. 3). Die Klemmfeder 21 erstreckt sich, ausgehend von einer Befestigung 30 an dem Kupplungsdeckel 13 an einem ersten Ende 31 entlang der Umfangsrichtung 19 bis hin zu einem zweiten Ende 35. An diesem zweiten Ende 35 wirkt die Klemmfeder 21 über einen zweiten Anschlag 55 mit dem Anlagebereich 25 zusammen zu Klemmung des Sensierrings 20.

Fig. 3 zeigt eine seitliche Detailansicht eines Sensierrings 20. Der Anlagebereich 25 verläuft zumindest in einem Teilabschnitt 26 unter einem Winkel 27 schräg zu einer in einer radialen Richtung 28 sich erstreckenden Ebene 29. Durch den angeschrägten Anlagebereich 25 kann erreicht werden, dass die Lage der, an dem in der axialen Richtung 17 feststehenden Kupplungsdeckel 13 befestigten Klemmfeder 21 zu dem Anlagebereich 25 trotz der Verschiebung des Sensierrings 20 entlang der axialen Richtung 17 weitgehend konstant bleibt.

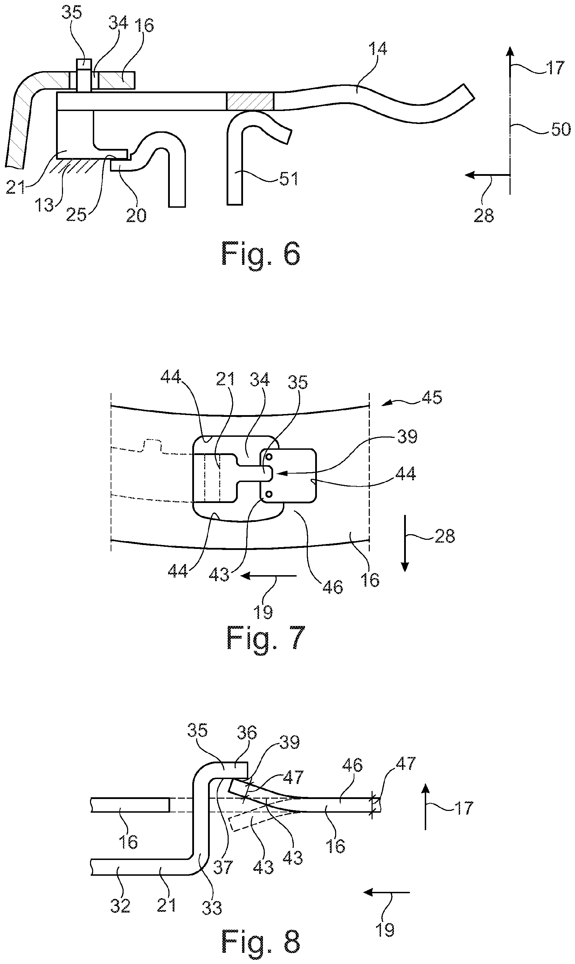

Fig. 4 bis 6 zeigen die Klemmfeder 21 in unterschiedlichen Ansichten. Fig. 4 zeigt eine Klemmfeder 21 in einer Draufsicht (entlang der axialen Richtung 17). Fig. 5 zeigt die Klemmfeder 21 in einer Seitenansicht (entlang der radialen Richtung 28) im eingebauten Zustand und Fig. 6 zeigt die Klemmfeder 21 in einer anderen Seitenansicht (entlang der Umfangsrichtung 19) im eingebauten Zustand.

Die Klemmfeder 21 erstreckt sich in einem ersten Abschnitt 32 im Wesentlichen entlang der Umfangsrichtung 19 entlang des Anlagebereichs 25. Die Klemmfeder 21 erstreckt sich in einem, an den ersten Abschnitt 32 anschließenden zweiten Abschnitt 33 in der axialen Richtung 17 durch eine Öffnung 34 in dem Zuganker 16 hindurch. Die Klemmfeder 21 weist in einem, sich an den zweiten Abschnitt 32 anschließenden und hin zu einem zweiten Ende 35 entlang der Umfangsrichtung 19 erstreckenden dritten Abschnitt 36 einen, in der axialen Richtung 17 mit dem Zuganker 16 zusammenwirkenden ersten Anschlag 37 auf. Durch eine Einstellung der Distanz 38 zwischen erstem Anschlag 37 und einem damit zusammenwirkenden Kontaktpunkt 39 des Zugankers 16 ist ein Auslösepunkt 40 der Klemmfeder 21 einstellbar, bei dem bei Betätigung der ersten Hebelfeder 14 die Klemmung des Sensierrings 20 durch die Klemmfeder 21 in dem Anlagebereich 25 durch den Zuganker 16 zumindest reduzierbar ist.

Hier weist zumindest der dritte Abschnitt 36 teilweise eine gegenüber dem ersten Abschnitt 32 und dem zweiten Abschnitt 33 geringere Breite 41 in der radialen Richtung 28 auf. Die Dicke 42 ist hier jeweils weitgehend als konstant dargestellt. Die geringere Breite 41 bzw. Dicke 42 erleichtert eine Umformung/ Einstellung/ Umbiegen zumindest des dritten Abschnitts 36 mit dem ersten Anschlag 37 gegenüber dem ersten Anschlag 32 bzw. ggf. zusätzlich dem zweiten Abschnitt 33 der Klemmfeder 21.

Die Klemmfeder 21 ist im Bereich des ersten Endes 31an einer Befestigung 30 über eine Vernietung 49 an dem Kupplungsdeckelteilbereich 48 des Kupplungsdeckel s13 befestigt, wobei der Kupplungsdeckelteilbereich 48 in der axialen Richtung 17 zwischen der mindestens einen Gegenplatte 7 und der ersten Hebelfeder 14 angeordnet ist.

Der Sensierring 20 wird durch die Klemmfeder 21 mit einem, in dem ersten Abschnitt 32 angeordneten Zentrierbereich 54 in einer radialen Richtung 28 gegenüber einer Drehachse 50 der Doppelkupplung 1 zentriert. Weiter ist in dem ersten Abschnitt 32 ein Klemmbereich 53 mit dem zweiten Anschlag 55 angeordnet, der mit dem Anlagebereich 25 des Sensierrings 20 zusammenwirkt.

In Fig. 6 ist weiter der Abstützring 51 erkennbar, der eine Abstützung für die erste Hebelfeder 14 beim Einrücken der Kupplung bildet. Der Abstützring 51 bildet einen ringförmigen Schwenkpunkt für die erste Hebelfeder 14 aus, wobei dieser Schwenkpunkt bei einem Nachstellen durch die Nachstelleinrichtung 18 ebenfalls entlang der axialen Richtung 17 verlagert werden kann, um den ursprünglichen Betätigungsweg zum Einrücken der Kupplung wiederherzustellen und den verschleißbedingten Fehlabstand zwischen der ersten Anpressplatte 8 und der Gegenplatte 7 zumindest teilweise zu kompensieren. Hierzu kann der Abstützring 51 über ein Rampensystem verdreht werden. Hinsichtlich der Anordnung und Funktion des Abstützrings 51 wird auf die DE 10 2013 207 694 A1 verwiesen.

Fig. 7 und 8 zeigen jeweils ein Detail der Klemmfeder 21 und des Zugankers 16; Fig. 7 in einer Draufsicht (entlang der axialen Richtung 17) und Fig. 8 in einer Seitenansicht (entlang der radialen Richtung 28).

Hier ist der Kontaktpunkt 39 mit dem ersten Anschlag 37 an einem Teilbereich 43 des Zugankers 16 angeordnet, der bei zusammengebauter Doppelkupplung 1 gegenüber dem Zuganker 16 zumindest in der axialen Richtung 17 mechanisch verformbar ist, so dass durch die Verformung der Auslösepunkt 40 der Klemmfeder 21 einstellbar ist.

Die Öffnung 34 des Zugankers 16 ist durch Wandbereiche 44 des Zugankers 16 begrenzt, wobei der Teilbereich 43 in die Öffnung 34 hineinragt und damit zumindest in einer radialen Richtung 28 von den Wandbereichen 44 beabstandet angeordnet ist.

Hier bildet der Teilbereich 43 also eine Art Zunge, die ausgehend von einem Wandbereich 44 der Öffnung 34 in die Öffnung 34 hineinragt. Eine Verformung des Teilbereichs 43 erfolgt damit nur gegenüber dem einen Wandbereich 44, von dem aus sich der Teilbereich 43 in die Öffnung 34 hinein erstreckt. Eine Belastung und ggf. Umformung der seitlichen Wandbereiche 44 kann so wirksam verhindert werden.

Hier sind Zuganker 16 und Teilbereich 43 zusammen einteilig ausgeführt.

Hier weist der Teilbereich 43 eine gegenüber dem, den Teilbereich 43 unmittelbar umgebenden Bereich 46 des Zugankers 16 eine konstante/ gleiche Wanddicke 47 auf.

### Bezugszeichenliste

- 1: Doppelkupplung
- 2: Antriebswelle
- 3: Kraftfahrzeug
- 4: Erste Getriebeeingangswelle
- 5: Zweite Getriebeeingangswelle
- 6: Getriebe
- 7: Gegenplatte
- 8: Erste Anpressplatte
- 9: Zweite Anpressplatte
- 10: Erste Kupplungsscheibe
- 11: Zweite Kupplungsscheibe
- 12: erste Seite
- 13: Kupplungsdeckel
- 14: Erste Hebelfeder
- 15: zweite Seite
- 16: Zuganker
- 17: axiale Richtung
- 18: Nachstelleinrichtung
- 19: Umfangsrichtung
- 20: Sensierring
- 21: Klemmfeder
- 22: Ringkörper
- 23: Rampe
- 24: Gegenrampe
- 25: Anlagebereich
- 26: Teilabschnitt
- 27: Winkel
- 28: radiale Richtung
- 29: Ebene
- 30: Befestigung
- 31: erstes Ende
- 32: erster Abschnitt
- 33: zweiter Abschnitt
- 34: Öffnung
- 35: zweites Ende
- 36: dritter Abschnitt
- 37: erster Anschlag
- 38: Distanz
- 39: Kontaktpunkt
- 40: Auslösepunkt
- 41: Breite
- 42: Dicke
- 43: Teilbereich
- 44: Wandbereich
- 45: Baugruppe
- 46: Bereich
- 47: Wanddicke
- 48: Kupplungsdeckelteilbereich
- 49: Vernietung
- 50: Drechachse
- 51: Abstützring
- 52: Zweite Hebelfeder
- 53: Klemmbereich
- 54: Zentrierbereich
- 55: Zweiter Anschlag

## Patentansprüche

1. Doppelkupplung (1) zum Kuppeln einer Antriebswelle (2) eines Kraftfahrzeuges (3) mit einer von zwei Getriebeeingangswellen (4, 5) eines Getriebes (6), mit mindestens einer Gegenplatte (7) und zwei Anpressplatten (8, 9) zum reibschlüssigen Verpressen jeweils einer Kupplungsscheibe (10, 11) zwischen der mindestens einen Gegenplatte (7) und jeder Anpressplatte (8, 9), wobei die erste Anpressplatte (8) auf einer ersten Seite (12) der Gegenplatte (7) angeordnet ist und ein Kupplungsdeckel (13) sowie eine erste Hebelfeder (14) auf einer gegenüberliegenden zweiten Seite (15) der Gegenplatte (7), wobei die erste Anpressplatte (8) über einen Zuganker (16) durch die erste Hebelfeder (14) gegenüber dem Kupplungsdeckel (13) entlang einer axialen Richtung (17) verlagerbar ist; wobei die Doppelkupplung (1) weiter zumindest eine Nachstelleinrichtung (18) zum Nachstellen eines verschleißbedingten Fehlabstands der ersten Anpressplatte (8) zu der Gegenplatte (7) aufweist, die einen in einer Umfangsrichtung (19) federbelasteten Sensierring (20) und eine Klemmfeder (21) umfasst, wobei der Sensierring (20) einen sich in der Umfangsrichtung (19) erstreckenden Ringkörper (22) und mindestens eine mit dem Ringkörper (22) verbundene Rampe (23) zum Abgleiten auf einer Gegenrampe (24) des Kupplungsdeckels (13) sowie einen Anlagebereich (25) zum klemmenden Anliegen der Klemmfeder (21) aufweist; wobei der Anlagebereich (25) zumindest in einem Teilabschnitt (26) unter einem Winkel (27) schräg zu einer in einer radialen Richtung (28) sich erstreckenden Ebene (29) verläuft; wobei sich die Klemmfeder (21), ausgehend von einer Befestigung (30) an dem Kupplungsdeckel (13) an einem ersten Ende (31) in einem ersten Abschnitt (32) im Wesentlichen entlang der Umfangsrichtung (19) entlang des Anlagebereichs (25) erstreckt, **dadurch gekennzeichnet, dass** sich die Klemmfeder (21) weiter in einem, an den ersten Abschnitt (32) anschließenden zweiten Abschnitt (33) in der axialen Richtung (17) durch eine Öffnung (34) in dem Zuganker (16) hindurch erstreckt und an einem dort vorliegenden zweiten Ende (35) einen dritten Abschnitt (36) aufweist mit einem in der axialen Richtung (17) mit dem Zuganker (16) zusammenwirkenden ersten Anschlag (37), so dass durch eine Einstellung einer Distanz (38) zwischen erstem Anschlag (37) und einem damit zusammenwirkenden Kontaktpunkt (39) des Zugankers (16) ein Auslösepunkt (40) der Klemmfeder (21) einstellbar ist, bei dem bei Betätigung der ersten Hebelfeder (14) die Klemmung des Sensierrings (20) durch die Klemmfeder (21) in dem Anlagebereich (25) durch den Zuganker (16) zumindest reduzierbar ist.

2. Doppelkupplung (1) nach Anspruch 1, wobei sich die Klemmfeder (21) in dem dritten Abschnitt (36) im Wesentlichen entlang der Umfangsrichtung (19) erstreckt.

3. Doppelkupplung (1) nach Anspruch 1 oder 2, wobei zumindest der dritte Abschnitt (36) eine gegenüber dem ersten Abschnitt (32) und/oder dem zweiten Abschnitt (33) geringere Breite (41) in der radialen Richtung (28) und/oder eine geringere Dicke (42) aufweist.

4. Doppelkupplung (1) nach einem der vorhergehenden Ansprüche, wobei der Kontaktpunkt (39) an einem Teilbereich (43) des Zugankers (16) angeordnet ist, der bei zusammengebauter Doppelkupplung (1) gegenüber dem Zuganker (16) zumindest in der axialen Richtung (17) mechanisch verformbar ist, so dass durch die Verformung der Auslösepunkt (40) der Klemmfeder (21) einstellbar ist.

5. Doppelkupplung (1) nach Anspruch 4, wobei die Öffnung (34) des Zugankers (16) durch Wandbereiche (44) des Zugankers (16) begrenzt ist, wobei der Teilbereich (43) in die Öffnung (34) hineinragt und damit zumindest in einer radialen Richtung (28) von den Wandbereichen (44) beabstandet angeordnet ist.

6. Doppelkupplung (1) nach einem der vorhergehenden Ansprüche 4 oder 5, wobei der Teilbereich (43) und der Zuganker (16) eine Baugruppe (45) bilden, die aus zumindest zwei Bauteilen, nämlich zumindest dem Teilbereich (43) und dem Zuganker (16), zusammengefügt ist.

7. Doppelkupplung (1) nach einem der vorhergehenden Ansprüche 4 bis 6, wobei zumindest der Teilbereich (43) eine gegenüber dem, den Teilbereich (43) unmittelbar umgebenden Bereich (46) des Zugankers (16) eine reduzierte Wanddicke (47) aufweist.

8. Doppelkupplung (1) nach einem der vorhergehenden Ansprüche, wobei der Kupplungsdeckel (13) zumindest mit einem Kupplungsdeckelteilbereich (48) in der axialen Richtung (17) zwischen der mindestens einen Gegenplatte (7) und der ersten Hebelfeder (14) angeordnet ist, wobei die Klemmfeder (21) in diesem Kupplungsdeckelteilbereich (48) an dem Kupplungsdeckel (13) befestigt ist.

9. Doppelkupplung (1) nach einem der vorhergehenden Ansprüche, wobei die Klemmfeder (21) über eine Vernietung (49) an dem Kupplungsdeckel (13) befestigt ist.

10. Doppelkupplung (1) nach einem der vorhergehenden Ansprüche, wobei der Sensierring (20) durch die Klemmfeder (21) in einer radialen Richtung (28) gegenüber einer Drehachse (50) der Doppelkupplung (1) zentriert ist.

## Claims

1. A dual clutch (1) for coupling a drive shaft (2) of a motor vehicle (3) with one of two transmission input shafts (4, 5) of a transmission (6), having at least one counterplate (7) and two pressure plates (8, 9) for the frictional pressing of one respective clutch disk (10, 11) between the at least one counterplate (7) and each pressure plate (8, 9), the first pressure plate (8) being arranged on a first side (12) of the counterplate (7) and a clutch cover (13) and a first lever spring (14) on an opposite, second side (15) of the counterplate (7), the first pressure plate (8) being displaceable in an axial direction (17) via a tie rod (16) through the first lever spring (14) opposite the clutch cover (13); the dual clutch (1) further having at least one adjusting device (18) for adjusting an incorrect distance between the first pressure plate (8) and the counterplate (7) due to wear, which has a sensing ring (20) spring-loaded in a circumferential direction (19) and a clamping spring (21), the sensing ring (20) having an annular body (22) extending in the circumferential direction (19) and at least one ramp (23) connected to the annular body (22) for sliding on a counter-ramp (24) of the clutch cover (13) and having a contact area (25) for resting on the clamping spring (21) in a clamping manner; the contact area (25) running at least in a partial section (26) at an angle (27) obliquely to a plane (29) extending in a radial direction (28); the clamping spring (21), starting from a fastening (30) on the clutch cover (13) at a first end (31) in a first section (32) extending essentially along the circumferential direction (19) along the contact area (25), **characterised in that** the clamping spring (21) extends further in a second section (33) adjoining the first section (32) in the axial direction (17) through an opening (34) in the tie rod (16) and, at a second end (35) present there, having a third section (36) with a first stop (37) interacting with the tie rod (16) in the axial direction (17), so that by adjusting a distance (38) between the first stop (37) and a interacting contact point (39) of the tie rod (16), a release point (40) of the clamping spring (21) can be adjusted, in which, when the first lever spring (14) is actuated, the clamping of the sensing ring (20) by the clamping spring (21) in the contact area (25) can be at least reduced by the tie rod (16).

2. The dual clutch (1) according to claim 1, wherein the clamping spring (21) extends in the third section (36) substantially along the circumferential direction (19).

3. The dual clutch (1) according to claim 1 or 2, wherein at least the third section (36) has a width (41) smaller than the first section (32) and/or the second section (33), in the radial direction (28), and/or has a smaller thickness (42).

4. The dual clutch (1) according to any one of the preceding claims, wherein the contact point (39) is arranged on a partial area (43) of the tie rod (16) which, when the dual clutch (1) is assembled, is mechanically deformable with respect to the tie rod (16) at least in the axial direction (17), so that the release point (40) of the clamping spring (21) can be adjusted by the deformation.

5. The dual clutch (1) according to claim 4, wherein the opening (34) of the tie rod (16) is delimited by wall areas (44) of the tie rod (16), wherein the partial area (43) protrudes into the opening (34) and thus is arranged spaced apart from the wall regions (44) at least in one radial direction (28),

6. The dual clutch (1) according to any one of the preceding claims 4 or 5, wherein the partial area (43) and the tie rod (16) form an assembly (45) which joins together at least two components, namely at least the partial area (43) and the tie rod (16).

7. The dual clutch (1) according to one of the preceding claims 4 to 6, wherein at least the partial area (43) has a reduced wall thickness (47) compared to the area (46) of the tie rod (16) immediately surrounding the partial area (43).

8. The dual clutch (1) according to any one of the preceding claims, wherein the clutch cover (13) is arranged at least having one clutch cover partial area (48) in the axial direction (17) between the at least one counterplate (7) and the first lever spring (14), wherein the clamping spring (21) is attached to the clutch cover (13) in this clutch cover partial area (48).

9. The dual clutch (1) according to any one of the preceding claims, wherein the clamping spring (21) is attached to the clutch cover (13) via a riveting (49).

10. The dual clutch (1) according to any one of the preceding claims, wherein the sensing ring (20) is centred by the clamping spring (21) in a radial direction (28) with respect to an axis of rotation (50) of the dual clutch (1).

## Revendications

1. Embrayage double (1) pour accoupler un arbre d'entraînement (2) d'un véhicule automobile (3) comportant l'un des deux arbres d'entrée de boîte de vitesses (4, 5) d'une boîte de vitesses (6), comportant au moins une contreplaque (7) et deux plaques de pression (8, 9) pour le pressage par friction respective d'un disque d'embrayage (10, 11) entre l'au moins une contreplaque (7) et chaque plaque de pression (8, 9), dans lequel la première plaque de pression (8) est disposée sur un premier côté (12) de la contreplaque (7) et un couvercle d'embrayage (13) ainsi qu'un premier ressort de levier (14) sont disposés sur un second côté (15) opposé de la contreplaque (7), dans lequel la première plaque de pression (8) peut être déplacée au moyen d'un tirant d'ancrage (16) à travers le premier ressort de levier (14) à l'opposé du couvercle d'embrayage (13) dans une direction axiale (17) ; dans lequel ledit embrayage double (1) comprend en outre au moins un dispositif de rattrapage de jeu (18) pour rattraper le jeu d'un écart erroné, dû à l'usure, de la première plaque de pression (8) par rapport à la contreplaque (7), lequel comprend une bague de détection (20) sollicitée par un ressort dans une direction circonférentielle (19) et un ressort de serrage (21), dans lequel la bague de détection (20) comprend un corps annulaire (22) s'étendant dans la direction circonférentielle (19) et au moins une rampe (23) raccordée au corps annulaire (22) pour coulisser sur une contrerampe (24) du couvercle d'embrayage (13) ainsi qu'une zone d'appui (25) pour placer de manière serrée le ressort de serrage (21) ; dans lequel la zone d'appui (25) s'étend au moins dans une section partielle (26) à un angle (27) obliquement par rapport à un plan (29) s'étendant dans une direction radiale (28) ; dans lequel le ressort de serrage (21) s'étend à partir d'une fixation (30) sur le couvercle d'embrayage (13) vers une première extrémité (31) dans une première section (32) essentiellement le long de la direction circonférentielle (19) le long de la zone d'appui (25), **caractérisé en ce que** le ressort de serrage (21) s'étend en outre dans une deuxième section (33) contiguë à la première section (32) dans la direction axiale (17) à travers une ouverture (34) dans le tirant d'ancrage (16) et comprend, à une seconde extrémité (35), laquelle se trouve à cet endroit, une troisième section (36) comportant une première butée (37) interagissant avec le tirant d'ancrage (16) dans la direction axiale (17) de telle sorte que, par réglage d'une distance (38) entre la première butée (37) et un point de contact (39) du tirant d'ancrage (16) interagissant avec celui-ci, un point de déclenchement (40) du ressort de serrage (21) peut être réglé, auquel, lors de l'actionnement du premier ressort de levier (14), le serrage de la bague de détection (20) peut être au moins réduit au moyen du ressort de serrage (21) dans la zone d'appui (25) à l'aide du tirant d'ancrage (16).

2. Embrayage double (1) selon la revendication 1, dans lequel le ressort de serrage (21) s'étend dans la troisième section (36) essentiellement le long de la direction circonférentielle (19).

3. Embrayage double (1) selon la revendication 1 ou 2, dans lequel au moins la troisième section (36) présente une largeur (41) inférieure à la première section (32) et/ou à la deuxième section (33) dans la direction radiale (28) et/ou une épaisseur (42) inférieure.

4. Embrayage double (1) selon l'une quelconque des revendications précédentes, dans lequel le point d'appui (39) est disposé sur une zone partielle (43) du tirant d'ancrage (16), laquelle, au moins dans le sens axial (17) lorsque l'embrayage double (1) est assemblé à l'opposé du tirant d'ancrage (16), est mécaniquement déformable, de telle sorte que le point de déclenchement (40) du ressort de serrage (21) peut être réglé par la déformation.

5. Embrayage double (1) selon la revendication 4, dans lequel l'ouverture (34) du tirant d'ancrage (16) est délimitée par des zones de paroi (44) du tirant d'ancrage (16), dans lequel la zone partielle (43) fait saillie dans l'ouverture (34) et est donc disposée à distance des zones de paroi (44) dans au moins une direction radiale (28).

6. Embrayage double (1) selon l'une quelconque des revendications 4 ou 5 précédentes, dans lequel la zone partielle (43) et le tirant d'ancrage (16) forment un module (45), lequel est assemblé d'au moins deux composants, à savoir au moins la zone partielle (43) et le tirant d'ancrage (16).

7. Embrayage double (1) selon l'une quelconque des revendications 4 à 6 précédentes, dans lequel au moins la zone partielle (43) présente, par rapport à la zone (46) du tirant d'ancrage (16) entourant immédiatement la zone partielle (43), une épaisseur de paroi (47) réduite,

8. Embrayage double (1) selon l'une quelconque des revendications précédentes, dans lequel le couvercle d'embrayage (13) est disposé au moins avec une zone partielle de couvercle d'embrayage (48) dans la direction axiale (17) entre l'au moins une contreplaque (7) et le premier ressort de levier (14), dans lequel le ressort de serrage (21), dans ladite zone partielle de couvercle d'embrayage (48), est fixé au couvercle d'embrayage (13).

9. Embrayage double (1) selon l'une quelconque des revendications précédentes, dans lequel le ressort de serrage (21) est fixé, à l'aide d'un rivet (49), au couvercle d'embrayage (13).

10. Embrayage double (1) selon l'une quelconque des revendications précédentes, dans lequel la bague de détection (20) est centrée au moyen du ressort de serrage (21) dans une direction radiale (28) par rapport à un axe de rotation (50) du double embrayage (1).
